# EUROPEAN PATENT SPECIFICATION

(11) **EP 3 658 819 B1**
(45) Date of publication and mention of the grant of the patent: **29.12.2021**
(21) Application number: 18740865.3
(22) Date of filing: 24.07.2018
(51) Int. Cl.: F21V 7/00, F21V 8/00, F21Y 105/00, F21Y 115/10, F21S 8/02

(54) **LIGHT GUIDE-BASED LUMINAIRE**
LICHTLEITERBASIERTE LEUCHTE
LUMINAIRE BASÉ SUR UN GUIDE DE LUMIÈRE

(30) Priority: 25.07.2017 WO PCT/CN2017/094315; 11.09.2017 EP 17190407
(43) Date of publication of application: 03.06.2020
(73) Proprietor: Signify Holding B.V., 5656 AE Eindhoven (NL)
(72) Inventor: BAO, Jing, 5656 AE Eindhoven (NL)
(74) Representative: Verweij, Petronella Daniëlle
(86) International application number: PCT/EP2018/069960
(87) International publication number: WO 2019/020584

(56) References cited:
- EP-A1- 1 903 358
- US-A1- 2010 020 543
- US-A1- 2014 043 856
- US-A1- 2014 104 868
- US-A1- 2014 268 869
- US-A1- 2014 268 874
- US-B1- 9 684 115

## Description

### FIELD OF THE INVENTION

The present invention relates to a luminaire comprising a housing delimiting a light exit window and a light guide mounted in the housing.

### BACKGROUND OF THE INVENTION

Solid state lighting (SSL), e.g. LED lighting, is rapidly gaining popularity because of its energy credentials and superior lifetime compared to traditional lighting, e.g. incandescent lighting, fluorescent lighting and halogen lighting. Nevertheless, market penetration of such SSL devices is not without challenges. For example, purchase cost of SSL devices is still higher than that of equivalent traditional light sources, even though the effective cost of such SSL devices is markedly lower due to their much longer lifetime, and this realisation by consumers is one of the reasons for the increased popularity of SSL.

A more serious challenge is to produce a luminous output with an SSL device that produces an aesthetically pleasing luminous output distribution. Most SSL devices, e.g. LEDs, act as approximate point sources that produce a Lambertian luminous distribution. This makes it necessary to shape the luminous output of such SSL devices using optical elements, in order to achieve the desired luminous output distribution. For example, direct visibility of the SSL elements in such devices should be avoided for reasons of glare, and for this reason many luminaires having a light exit window that is directly observable, e.g. ceiling-mounted luminaires such as troffers, deploy indirect illumination arrangements of the light exit window, for example in which the light emitted by the SSL elements is projected onto a light guide, which deflect the incident light towards the light exit window, thereby hiding the SSL elements from direct view and reducing the glare experienced by someone directly looking at the luminaire. An example of such a lightguide base luminaire is disclosed in US 2014/0104868 A1. Another example of luminaire is disclosed in US 9 684 115 B1.

However, such solutions each have their own drawbacks. For example, a light guide-based solution typically deploys outcoupling structures, e.g. arranged in a regular pattern along the light guide, to generate a relatively homogeneous luminous output with the luminaire. In order to avoid these outcoupling structures to be visible as light spots in the luminous output of the luminaire, such a luminaire typically further comprises a diffuser in the light exit window. Moreover, the light guide typically defines the light exit window of the luminaire, which means that the light guide has a large area. This adds to the overall cost of the luminaire, whilst at the same time making it difficult to design a particularly thin luminaire due to the required structural integrity of such a large area light guide and the required presence of the diffuser.

### SUMMARY OF THE INVENTION

The present invention seeks to provide a more compact luminaire without sacrificing optical performance.

According to the invention, there is provided a luminaire comprising a housing delimiting a light exit window and comprising a reflective inner surface facing the light exit window; an elongate light guide mounted in the housing and partially covering the light exit window by extending in an elongation direction across a central region of the light exit window, the elongate light guide comprising a first major surface facing the reflective inner surface; a second major surface opposite the first major surface; a plurality of light outcoupling structures proximal to the second major surface arranged to redirect light onto the reflective inner surface through the first major surface; and a pair of opposing side surfaces being arranged at opposite ends of the elongate light guide in said elongation direction extending between the first major surface and the second major surface; and at least one light source arranged to couple light into the light guide via one of said opposing side surfaces.

The luminaire of the present invention deploys a light guide that covers only a part of the light exit window and is arranged such that light generated by the at least one light source and coupled into the light guide is coupled out of the light guide in the direction towards the reflective inner surface of the housing rather than towards the light exit window, thereby providing an indirect luminaire where through appropriate shaping of the reflective inner surface the entirety of the light exit window produces a luminous output without requiring either a light guide that covers the entire light exit window or a diffuser to homogenise the luminous output of the luminaire. Consequently, a luminaire is provided that can be produced in a cost-effective manner due to the ease of assembly and limited number and size of components required and that can be dimensioned to form a compact luminaire in terms of luminaire thickness or height.

The elongate light guide leaves exposed a pair of further regions of the light exit window adjacent to the central region through which light reflected by the reflective inner surface of the housing can escape the luminaire. This is a particularly cost-effective embodiment due to the small size of the elongate light guide and furthermore is aesthetically pleasing due to the symmetrical appearance of the light exit window including the elongate light guide.

The light outcoupling structures are located on the second major surface and may take any suitable shape, e.g. scattering structures, white paint dots, and so on.

According to the invention, the light exit window has a circular outline. The luminaire of the present invention when embodied as a circular luminaire benefits from the fact that the light sources do not have to do be arranged along the entire circumference of a circular light guide, which requires flexible carriers such as a flexible PCB, which not only is costly but also poses assembly challenges in order to achieve the desired mechanical stability when mounting such a flexible carrier on the housing. Nevertheless, embodiments of the luminaire of the present invention are not limited to circular luminaires and in alternative embodiments the luminaire has a polygonal outline, e.g. a rectangular or square luminaire.

The at least one light source in some embodiments comprises a first light source arrangement arranged to couple light into the light guide via a first side surface of said pair of opposing side surfaces and a second light source arrangement arranged to couple light into the light guide via the side surface of said pair of opposing side surfaces opposing the first side surface. By arranging light sources on opposing sides of the light guide, a particularly homogenous luminous output may be produced by the luminaire.

The at least one light source may be arranged on a planar or curved carrier in between said side surface and the housing. A planar carrier has the advantage that the carrier can be made of a rigid material, thereby increasing robustness of the carrier although the use of a planar carrier may require the provision of a planar mounting portion within the housing, which may require adaptation of the design of the housing, for example where the housing has a circular outline. A curved carrier, e.g. a flexible carrier, may be used in particular in such circular housings instead such that the design of the housing does not require a dedicated mounting portion for the carrier, which may be more cost-effective for such circular luminaires.

The at least one light source preferably is a solid state light source as such light sources have a long lifetime, are compact and energy efficient and are therefore the preferred choice of light source in the luminaire according to embodiments of the present invention although other light sources of course may be contemplated.

The luminaire may further comprise at least one cover plate engaged with the housing, each cover plate covering a side surface of the pair of opposing side surfaces of the elongate light guide such that a light source arranged at said side surface is covered. Such cover plates therefore prevent the at least one light source from being directly observable, thus preventing glare. Optionally, the cover plate may form an integral part of the housing, i.e. the housing may be shaped such that the at least one light source is shielded from being directly observable by part of the housing.

The housing may further comprise a lip delimiting at least part of the light exit window, wherein the light guide is supported by said lip. This is a particularly straightforward and cost-effective way of mounting the light guide in the housing.

The reflective inner surface preferably comprises a concave surface portion, e.g. a concave parabolic surface portion in order to reflect the light received from the light guide towards the light exit window such that the entirety of the light exit window emits light reflected by the reflective inner surface, thereby achieving a luminaire having a particularly good homogeneity of its luminous output.

As previously mentioned, the luminaire according to at least some embodiments of the present invention can be achieved is a particularly compact luminaire. More specifically, a maximum clearance between the first major surface of the light guide and the reflective inner surface of the housing may be in a range of 4-15 mm. If this clearance is less than 4 mm, it may be practically impossible to achieve good homogeneity in the luminous output of the luminaire, whereas if this clearance is more than 15 mm, the luminaire may be perceived as being not particularly compact. When the maximum clearance between the first major surface of the light guide and a reflective inner surface of the housing is within the above range, the maximum height or thickness of the luminaire can be kept to 20 mm or less, i.e. this maximum height does not exceed 20 mm, thereby yielding a compact (thin) luminaire.

In some embodiments, the housing may be made of a non-reflective material such as a polymer material, a composite material, a non-reflective metal or metal alloy, and so on, in which case the reflective inner surface of the housing carries a reflective coating, e.g. a white paint, metal film, and so on to achieve the desired reflectivity of the inner surface of the housing. Alternatively, the housing may be made of a sufficiently reflective material such that a reflective coating on the inner surface of the housing in order to make the surface reflective may not be required. For example, the housing may be made by shaping a metal sheet, i.e. the housing may be a sheet metal housing, which metal sheet may have the desired reflectivity such that a separate reflective coating may be omitted.

In a particular set of embodiments, the luminaire is a troffer as such ceiling-mounted luminaires typically are large area luminaires that benefit from a compact design as well as from low-cost. For example, the compact nature of the luminaire according to at least some of the embodiments of the present invention allows for such a luminaire to be fitted in tight headspaces over a suspended ceiling, whereas the small number and size of the components used in the luminaire reduces the overall weight of the luminaire, which facilitates its mounting in such a suspended ceiling. However, it should be understood that embodiments of the luminaire of the present invention are not limited to troffers as the luminaire may take any suitable shape or form.

### BRIEF DESCRIPTION OF THE DRAWINGS

Embodiments of the invention are described in more detail and by way of non-limiting examples with reference to the accompanying drawings, wherein:
FIG. 1 schematically depicts a face-on view of a luminaire according to an embodiment;
FIG. 2 schematically depicts a cross-sectional view of the luminaire in FIG. 1 along the line A-A';
FIG. 3 schematically depicts a cross-sectional view of the luminaire in FIG. 1 along the line B-B';
FIG. 4 schematically depicts an aspect of the cross-sectional view depicted in FIG. 3 in more detail;
FIG. 5 schematically depicts an aspect of the face-on view depicted in FIG. 1 in more detail;
FIG. 6 schematically depicts another cross-sectional view of a luminaire according to an embodiment; and
FIG. 7 schematically depicts optical principle of the luminaire according to embodiments of the present invention using the cross-sectional view of the luminaire of FIG. 6.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts. It furthermore should be understood that where reference is made to a metal in the present application, this includes metal alloys unless specifically stated otherwise.

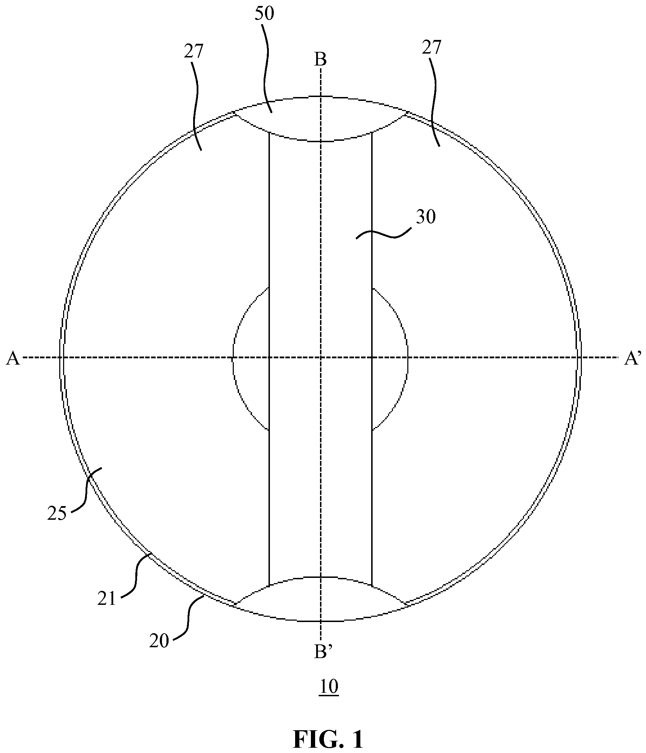

FIG. 1 schematically depicts a face-on view of a luminaire 10 according to an embodiment of the present invention, more specifically of the light exit window 25 of the luminaire 10. The light exit window 25 is delimited by an edge or rim 21 of the housing 20 of the luminaire 10. Across the light exit window 25 extends an elongate light guide 30 that is mounted in the housing 20. The light guide 30 typically covers only a part of the light exit window 25, such as a central region of the light exit window 25, with at least one region of the light exit window 25, e.g. two regions on opposite elongate sides of the light exit window 25 not being covered by the light guide 30.

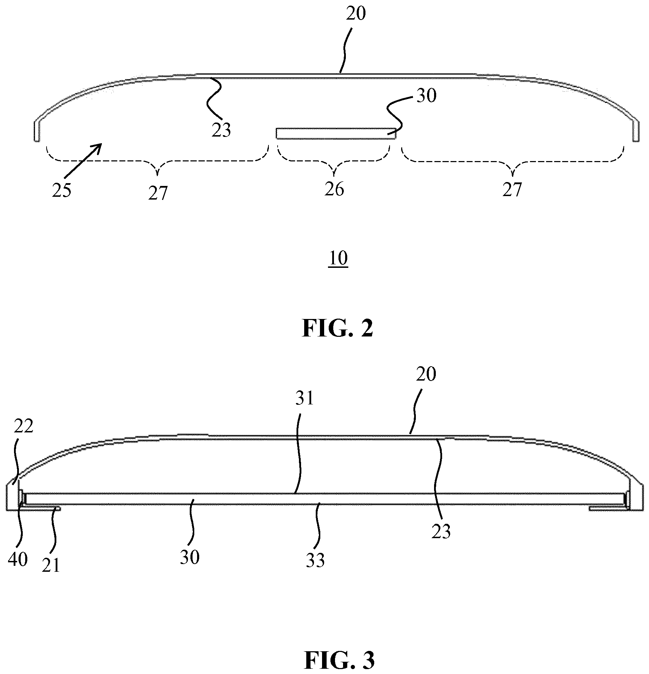

This is shown more clearly in the cross-sectional view of the luminaire 10 along the line A-A', which is depicted in FIG. 2. In this cross-sectional view, the light exit window 25 is divided into a central region 26 in which the elongate light guide 30 is positioned and two regions 27 on either side of the central region 26 that are left uncovered by the elongate light guide 30. As can also be seen in FIG. 2, the housing 20 has a reflective inner surface 23 facing the light exit window 25 such that light directed by the elongate light guide 30 onto the reflective inner surface 23 of the housing 20 can be reflected by the reflective inner surface 23 towards the light exit window 25 of the luminaire 10.

The reflective inner surface 23 of the housing 20 of the luminaire 10 may have any suitable shape in order to implement the desired optical function of the reflective inner surface 23. For example, the reflective inner surface 23 may have a concave surface portion such as a concave parabolic surface portion in order to impart a degree of collimation onto the incident light received from the elongate light guide 30 to shape the luminous output of the luminaire 10. As will be further understood, the shape of the reflective inner surface 23 further may be chosen in order to achieve a desired degree of homogeneity of the luminous output exiting the luminaire 10 through its light exit window 25, e.g. to achieve a substantially constant luminous intensity across the area of the light exit window 25.

The housing 20 may be made of a reflective material, e.g. a metal sheet or the like such that its inner surface 23 is naturally reflective. In such an embodiment, the reflectivity of the reflective inner surface 23 further may be enhanced by polishing or otherwise treating the reflective inner surface 23. Alternatively, the housing 20 may be made of a non-reflective material, i.e. a material having insufficient reflectivity to achieve the desired reflectivity at its inner surface 23, such as a polymer material, non-reflective metal, a composite material, a natural material such as wood, and so on, in which case the inner surface 23 may carry a reflective coating to make the surface reflective. Any suitable reflective coating such as for example a white paint coating, a metal coating, and so on, may be used for this purpose.

The elongate light guide 30 may be made of any suitable material, such as for example glass or an optical grade polymer such as polycarbonate, polyethylene terephthalate, poly (methyl methacrylate) and so on. Such light guides operate on the principle of total internal reflection such that light travelling through the light guide is reflected back into the light guide by its major surfaces where such light is incident on to such a major surface under an angle not exceeding the critical angle. In order to extract the light from such light guides, the light guides typically comprise a pattern of outcoupling structures that redirect light incident thereon towards one of the major surfaces of the light guide under angles exceeding the critical angle such that such redirected light can escape the light guide. As this is well-known per se, this will not be explained in further detail for the sake of brevity only.

FIG. 3 schematically depicts a cross-sectional view of the luminaire 10 along the line B-B', in which the major surfaces 31 and 33 of the elongate light guide 30 are highlighted. The first major surface 31 of the elongate light guide 30 faces the reflective inner surface 23 of the housing 20, whereas the second major surface 33 opposite the first major surface 31 of the light guide 30 forms part of the light exit window 25 of the luminaire 10.

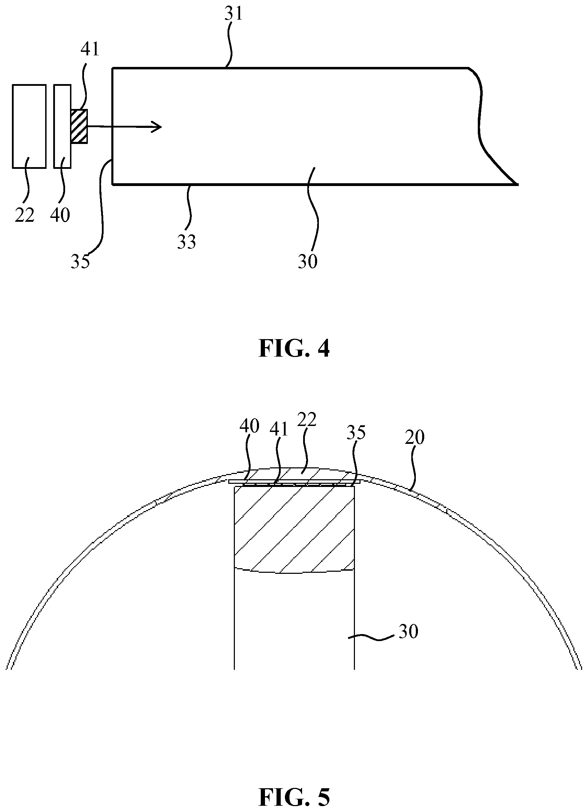

The housing 20 further comprises a mounting region 22 onto which a carrier 40 is mounted carrying at least one light source 41 as is shown in more detail in FIG. 4 and FIG. 5. The at least one light source 41 typically is arranged such that light emitted by the at least one light source 41 is coupled into the elongate light guide 30 through one of its side or edge surfaces 35 extending between the first major surface 31 and the second major surface 33 perpendicular to the elongation direction of the elongate light guide 30. In other words, the opposing side surfaces 35 are arranged at opposite ends of the elongate light guide 30 in its elongation direction.

The at least one light source 41 may have an optical axis (not shown) that preferably is aligned with the elongation direction of the elongate light guide 30 such that the amount of light generated by the at least one light source 41 that is coupled into the elongate light guide 30 through one of its side surfaces 35 is maximised. In a preferred embodiment, the at least one light source 41 is a solid-state light element such as an LED or a laser diode. More preferably, the luminaire 10 includes a carrier 40 carrying an arrangement of light sources 41, i.e. one or more solid-state light elements, at each of the edge surfaces 35 of the elongate light guide 30 such that light is coupled into the elongate light guide 30 from both ends of the light guide.

The housing 20 may have any suitable outline, such as a circular outline or a polygonal outline such as a rectangular, e.g. square, outline. In the figures of the present application, the housing 20 is shown to have a circular outline by way of non-limiting example only. Where the housing 20 comprises a circular outline, the housing 20 may further comprise at least one planar mounting region 22 on its inner surface onto which a planar carrier 40 carrying at least one light source 41 may be mounted in any suitable manner, e.g. with fixing means such as screws, with an adhesive such as double sided tape or glue, and so on. Alternatively, such a planar mounting region 22 may be omitted and a curved carrier 40 matching the curvature of the inner surface of the housing 20 may be used instead. It is also possible to use a flexible carrier 40 such that the carrier can be used both on planar and curved mounting regions of the housing 20 of the luminaire 10.

As shown in FIG. 1, the luminaire 10 may further comprise at least one cover plate 50 that covers an edge surface 35 of the elongate light guide 30 such that the at least one light source 41 arranged at that edge surface is hidden from view. This for example may be desirable to prevent a person looking directly at the luminaire 10 from experiencing glare. The at least one cover plate 50 may be made of any suitable opaque material or combination of materials, e.g. a plastics or metal cover plate, and may be attached to the housing 20 in any suitable manner, e.g. using one or more fasteners such as screws, clips and so on. Alternatively, the at least one cover plate 50 may form an integral part of the housing 20. The at least one cover plate 50 typically is arranged such that it covers part of the light exit window 25, e.g. part of the regions 27 that are uncovered by the elongate light guide 30.

The elongate light guide 30 may be mounted in the housing in any suitable manner. For example, the elongate light guide 30 may be affixed to or supported by a pair of cover plates 50 at the opposite end surfaces 35 of the elongate light guide 30, which cover plates 50 may be part of the housing 20 as previously explained in order to provide a particularly robust mounting arrangement. Alternatively, as schematically depicted in FIG. 3, the housing 20 may comprise a lip or rim 21 in the plane of the light exit window 25 that extends inwardly into the light exit window 25 onto which the elongate light guide 30 is mounted. Such a lip 21 may be present around the full circumference or outline of the light exit window 25 or around parts thereof only. It is furthermore noted for the avoidance of doubt that the one or more cover plates 50 may form part of the lip 21. Other suitable mounting arrangements will be immediately apparent to the skilled person.

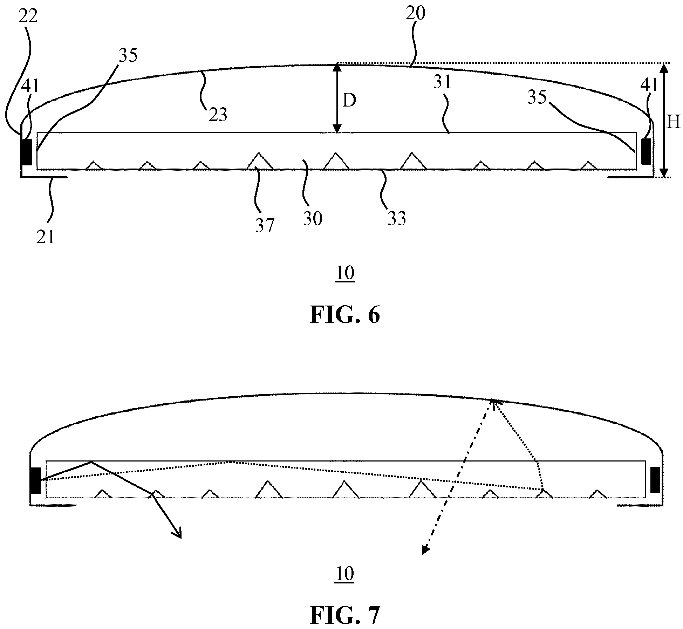

As schematically depicted in FIG. 6, the elongate light guide 30 further comprises a plurality of light outcoupling structures 37 arranged proximal to the second major surface 33 of the elongate light guide 30 such as on the second major surface 33. Any suitable type of light outcoupling structures may be used for this purpose, such as for example scattering particles, white paint dots, and so on. Any suitable pattern of such light outcoupling structures 37 may be used for this purpose.

As shown in FIG. 7, the light outcoupling structures 37 disrupt the total internal reflection of light emitted by the at least one light source 41 into the elongate light guide 30 such that a minor fraction of this light as indicated by the solid arrow exits the elongate light guide 30 through its second major surface 33 whereas a major fraction of this light as indicated by the dashed arrow exits the elongate light guide 30 through its first major surface 31 towards the reflective inner surface 23 of the housing 20, which reflects this light back towards the elongate light guide 30, i.e. towards the central region 26 of the light exit window 25, as well as to the one or more regions 27 of the light exit window 25 such that the entire light exit window 25 emits the light produced by the at least one light source 41 within the luminaire 10, thereby producing a substantially homogeneous luminous output across the light exit window 25.

A particular advantage of the luminaire 10 according to embodiments of the present invention is that a maximum clearance D between the elongate light guide 30 and the reflective inner surface 23 of the housing 10 can be kept to a minimum in order to achieve a luminaire 10 having a limited height or thickness H. In some embodiments, the maximum clearance D lies in a range of 4-15 mm such that the overall height or thickness H of the luminaire 10 does not exceed 20 mm. It has been found that if the maximum clearance D is made smaller than 4 mm, the optical performance of the luminaire 10 is compromised in the sense that it becomes difficult to achieve a homogeneous light distribution across the light exit window 25 whereas if the maximum clearance D exceeds 15 mm it may no longer be possible to restrict the overall height or thickness of the luminaire 10 to 20 mm or less. Of course, embodiments of the present invention are not limited to luminaires 10 having a thickness not exceeding 20 mm as thicker luminaires deploying the design of the luminaire 10 according to embodiments of the present invention equally may be contemplated.

In selected embodiments, the luminaire 10 is a troffer, such as a troffer to be mounted in a suspended ceiling although embodiments of the luminaire 10 are not limited thereto. Where the luminaire 10 is a troffer, it benefits from its slimline appearance, i.e. limited thickness, as it can be fitted in tight headspaces above such a suspended ceiling and is furthermore benefits from its (associated) limited weight, which facilitates easy mounting of such a luminaire 10 in such a suspended ceiling.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A luminaire (10) comprising:
a housing (20) delimiting a light exit window (25) and comprising a reflective inner surface (23) facing the light exit window;
an elongate light guide (30) mounted in the housing and partially covering the light exit window by extending in an elongation direction across a central region (26) of the light exit window, the elongate light guide comprising:
a first major surface (31) facing the reflective inner surface;
a second major surface (33) opposite the first major surface; and
a pair of opposing side surfaces (35) being arranged at opposite ends of the elongate light guide (30) in said elongation direction, and extending between the first major surface and the second major surface; and
at least one light source (41) arranged to couple light into the light guide;
wherein the elongate light guide (30) leaves exposed a pair of further regions (27)
of the light exit window (25) adjacent to the central region (26), and **characterized in that** the light guide further comprises a plurality of light outcoupling structures (37) proximal to the second major surface arranged to redirect light onto the reflective inner surface through the first major surface, **in that** the at least one light source (41) is arranged to couple light into the light guide via one of said opposing side surface (35), and **in that** the light exit window (25) has a circular outline.

2. The luminaire (10) of claim 1, wherein the light outcoupling structures (37) are located on the second major surface (33).

3. The luminaire (10) of any of claims 1-2, wherein the at least one light source (41) comprises:
a first light source arrangement arranged to couple light into the light guide (30) via a first side surface of said pair of opposing side surfaces (35); and
a second light source arrangement arranged to couple light into the light guide via the side surface of said pair of opposing side surfaces opposing the first side surface.

4. The luminaire (10) of any of claims 1-3, wherein the at least one light source (41) is arranged on a planar or curved carrier (40) in between said side surface (35) and the housing (20).

5. The luminaire (10) of any of claims 1-4, wherein the at least one light source (41) is a solid state light source.

6. The luminaire (10) of any of claims 1-5, further comprising at least one cover plate (50) engaged with the housing (20), each cover plate covering a side surface (35) of the pair of opposing side surfaces of the elongate light guide (30) such that a light source (41) arranged at said side surface is covered.

7. The luminaire (10) of any of claims 1-6, wherein the housing (20) comprises a lip (21) delimiting at least part of the light exit window (25), and wherein the light guide (30) is supported by said lip.

8. The luminaire (10) of any of claims 1-7, wherein the reflective inner surface (23) comprises a concave surface portion.

9. The luminaire (10) of any of claims 1-8, wherein a maximum clearance (D) between the first major surface (31) of the light guide (30) and the reflective inner surface (23) of the housing (20) is in a range of 4-15 mm.

10. The luminaire (10) of any of claims 1-9, wherein a maximum height (H) of the luminaire does not exceed 20 mm.

11. The luminaire (10) of any of claims 1-10, wherein the reflective inner surface (21) of the housing (20) carries a reflective coating.

12. The luminaire (10) of any of claims 1-11, wherein the housing (20) is a sheet metal housing.

13. The luminaire (10) of any of claims 1-12, wherein the luminaire is a troffer.

## Patentansprüche

1. Leuchte (10), die Folgendes umfasst:
ein Gehäuse (20), das ein Lichtaustrittsfenster (25) begrenzt und eine reflektierende Innenoberfläche (23) umfasst, die zu dem Lichtaustrittsfenster zeigt;
einen länglichen Lichtleiter (30), der in dem Gehäuse befestigt ist und teilweise das Lichtaustrittsfenster abdeckt, indem er sich in einer Längsrichtung über einen Mittelbereich (26) des Lichtaustrittsfensters erstreckt, wobei der längliche Lichtleiter Folgendes umfasst:
eine erste Hauptoberfläche (31), die zu der reflektierenden Innenoberfläche zeigt;
eine zweite Hauptoberfläche (33), gegenüber der ersten Hauptoberfläche;
ein Paar gegenüberliegender Seitenoberflächen (35), die an gegenüberliegenden Enden des länglichen Lichtleiters (30) in der Längsrichtung eingerichtet sind und sich zwischen der ersten Hauptoberfläche und der zweiten Hauptoberfläche erstrecken, und
mindestens eine Lichtquelle (41), die eingerichtet ist, Licht in den Lichtleiter zu koppeln;
wobei der längliche Lichtleiter (30) ein Paar weiterer Bereiche (27) des Lichtaustrittsfensters (25), die an den Mittelbereich (26) angrenzen, freiliegend lässt, und
**dadurch gekennzeichnet, dass** der Lichtleiter weiter eine Vielzahl von Lichtauskopplungsstrukturen (37) proximal zu der zweiten Hauptoberfläche umfasst, die eingerichtet sind, Licht auf die reflektierende Innenoberfläche durch die erste Hauptoberfläche umzuleiten, dadurch, dass die mindestens eine Lichtquelle (41) eingerichtet ist, Licht über eine der gegenüberliegenden Seitenoberflächen (35) in den Lichtleiter zu koppeln, und dadurch, dass das Lichtaustrittsfenster (25) einen kreisförmigen Umriss aufweist.

2. Leuchte (10) nach Anspruch 1, wobei die Lichtauskopplungsstrukturen (37) an der zweiten Hauptoberfläche (33) liegen.

3. Leuchte (10) nach einem der Ansprüche 1-2, wobei die mindestens eine Lichtquelle (41) umfasst:
eine erste Lichtquellenanordnung, die eingerichtet ist, Licht über eine erste Seitenoberfläche des Paares gegenüberliegender Seitenoberflächen (35) in den Lichtleiter (30) zu koppeln; und
eine zweite Lichtquellenanordnung, die eingerichtet ist, Licht über die Seitenoberfläche des Paares gegenüberliegender Seitenoberflächen, die der ersten Seitenoberfläche gegenüberliegt, in den Lichtleiter zu koppeln.

4. Leuchte (10) nach einem der Ansprüche 1-3, wobei die mindestens eine Lichtquelle (41) an einem ebenen oder gekrümmten Träger (40) zwischen der Seitenoberfläche (35) und dem Gehäuse (20) eingerichtet ist.

5. Leuchte (10) nach einem der Ansprüche 1-4, wobei die mindestens eine Lichtquelle (41) eine Festzustandslichtquelle ist.

6. Leuchte (10) nach einem der Ansprüche 1-5, weiter umfassend mindestens eine Abdeckplatte (50), die mit dem Gehäuse (20) eingreift, wobei jede Abdeckplatte eine Seitenoberfläche (35) des Paares gegenüberliegender Seitenoberflächen des länglichen Lichtleiters (30) abdeckt, sodass eine Lichtquelle (41), die bei der Seitenoberfläche eingerichtet ist, abgedeckt wird.

7. Leuchte (10) nach einem der Ansprüche 1-6, wobei das Gehäuse (20) eine Lippe (21) umfasst, die mindestens einen Teil des Lichtaustrittsfensters (25) begrenzt, und wobei der Lichtleiter (30) von der Lippe gestützt wird.

8. Leuchte (10) nach einem der Ansprüche 1-7, wobei die reflektierende Innenoberfläche (23) einen konkaven Oberflächenabschnitt umfasst.

9. Leuchte (10) nach einem der Ansprüche 1-8, wobei ein maximaler Zwischenraum (D) zwischen der ersten Hauptoberfläche (31) des Lichtleiters (30) und der reflektierenden Innenoberfläche (23) des Gehäuses (20) in einer Spanne von 4-15 mm liegt.

10. Leuchte (10) nach einem der Ansprüche 1-9, wobei eine Maximalhöhe (H) der Leuchte 20 mm nicht übersteigt.

11. Leuchte (10) nach einem der Ansprüche 1-10, wobei die reflektierende Innenoberfläche (21) des Gehäuses (20) eine reflektierende Beschichtung trägt.

12. Leuchte (10) nach einem der Ansprüche 1-11, wobei das Gehäuse (20) ein Blechgehäuse ist.

13. Leuchte (10) nach einem der Ansprüche 1-12, wobei die Leuchte eine Muldenleuchte ist.

## Revendications

1. Luminaire (10) comprenant :
un boîtier (20) délimitant une fenêtre de sortie de lumière (25) et comprenant une surface intérieure réfléchissante (23) faisant face à la fenêtre de sortie de lumière ;
un guide de lumière allongé (30) monté dans le boîtier et couvrant partiellement la fenêtre de sortie de lumière par l'extension dans une direction d'allongement sur une région centrale (26) de la fenêtre de sortie de lumière, le guide de lumière allongé comprenant :
une première surface majeure (31) faisant face à la surface intérieure réfléchissante ;
une seconde surface majeure (33) opposée à la première surface majeure ; et
une paire de surfaces latérales opposées (35) étant agencée aux extrémités opposées du guide de lumière allongé (30) dans ladite direction d'allongement, et s'étendant entre la première surface majeure et la seconde surface majeure ; et
au moins une source de lumière (41) agencée pour coupler de la lumière dans le guide de lumière ;
dans lequel le guide de lumière allongé (30) laisse exposée une paire d'autres régions (27) de la fenêtre de sortie de lumière (25) adjacente à la région centrale (26), et
**caractérisé en ce que** le guide de lumière comprend en outre une pluralité de structures de découplage de lumière (37) proximales à la seconde surface majeure agencée pour rediriger de la lumière sur la surface intérieure réfléchissante à travers la première surface majeure, **en ce que** l'au moins une source de lumière (41) est agencée pour coupler de la lumière dans le guide de lumière via une de ladite surface latérale opposée (35), et **en ce que** la fenêtre de sortie de lumière (25) présente un contour circulaire.

2. Luminaire (10) selon la revendication 1, dans lequel les structures de découplage de lumière (37) sont situées sur la seconde surface majeure (33).

3. Luminaire (10) selon l'une quelconque des revendications 1-2, dans lequel l'au moins une source de lumière (41) comprend :
un premier agencement de source de lumière agencé pour coupler de la lumière dans le guide de lumière (30) via une première surface latérale de ladite paire de surfaces latérales opposées (35) ; et
un second agencement de source de lumière agencé pour coupler de la lumière dans le guide de lumière via la surface latérale de ladite paire de surfaces latérales opposées à la première surface latérale.

4. Luminaire (10) selon l'une quelconque des revendications 1-3, dans lequel l'au moins une source de lumière (41) est agencée sur un support planaire ou incurvé (40) entre ladite surface latérale (35) et le boîtier (20).

5. Luminaire (10) selon l'une quelconque des revendications 1-4, dans lequel l'au moins une source de lumière (41) est une source de lumière à l'état solide.

6. Luminaire (10) selon l'une quelconque des revendications 1-5, comprenant en outre au moins une plaque de couverture (50) mise en prise avec le boîtier (20), chaque plaque de couverture recouvrant une surface latérale (35) de la paire de surfaces latérales opposées du guide de lumière allongé (30) de sorte qu'une source de lumière (41) agencée au niveau de ladite surface latérale soit recouverte.

7. Luminaire (10) selon l'une quelconque des revendications 1-6, dans lequel le boîtier (20) comprend une lèvre (21) délimitant au moins une partie de la fenêtre de sortie de lumière (25), et dans lequel le guide de lumière (30) est supporté par ladite lèvre.

8. Luminaire (10) selon l'une quelconque des revendications 1-7, dans lequel la surface intérieure réfléchissante (23) comprend une portion de surface concave.

9. Luminaire (10) selon l'une quelconque des revendications 1-8, dans lequel un espacement maximum (D) entre la première surface majeure (31) du guide de lumière (30) et la surface intérieure réfléchissante (23) du boîtier (20) est dans une plage de 4-15 mm.

10. Luminaire (10) selon l'une quelconque des revendications 1-9, dans lequel une hauteur maximum (H) du luminaire n'excède pas 20 mm.

11. Luminaire (10) selon l'une quelconque des revendications 1-10, dans lequel la surface intérieure réfléchissante (21) du boîtier (20) porte un revêtement réfléchissant.

12. Luminaire (10) selon l'une quelconque des revendications 1-11, dans lequel le boîtier (20) est un boîtier en tôle.

13. Luminaire (10) selon l'une quelconque des revendications 1-12, dans lequel le luminaire est un chemin lumineux encastré.
